# EUROPEAN PATENT APPLICATION

(11) **EP 2 256 903 A2**
(43) Date of publication of application: **01.12.2010**
(21) Application number: 10163275.0
(22) Date of filing: 19.05.2010
(51) Int. Cl.: H02K 1/17, H02K 1/27

(54) **Method for producing ring magnet, ring magnet, motor, and electric power steering system**

(30) Priority: 22.05.2009 JP 2009124133
(71) Applicant: JTEKT CORPORATION, Chuo-ku Osaka-shi Osaka 542-8502 (JP)
(72) Inventor: Shibata, Yoshiyuki, Osaka-shi, Osaka 542-8502 (JP); Mori, Yutaka, Osaka-shi, Osaka 542-8502 (JP)
(74) Representative: TBK-Patent

(57) **Abstract**

Magnetic poles of a ring magnet are formed by magnetizing multiple small regions that are set in each of magnetic pole regions that are set in an outer peripheral face of the ring magnet so as to correspond to the magnetic poles. The small regions are set in such a manner that the proportion of a region that is magnetized increases from a boundary portion of each magnetic pole region toward a center portion of the magnetic pole region in the circumferential direction.

## Description

### BACKGROUND OF THE INVENTION

### 1. Field of the Invention

The invention relates to a method for producing a ring magnet, a ring magnet, a motor, and an electric power steering system

### 2. Description of the Related Art

For example, Japanese Patent Application Publication No. 2008-295207 (JP-A-2008-295207) describes a motor used as a drive source for an electric power steering system (EPS). In this motor, a cylindrical ring magnet is used as a field permanent magnet in view of, for example, fitting efficiency.

In a ring magnet as described above, usually, multiple magnetic pole regions are set along its circumferential direction. Then, these magnetic pole regions are magnetized in such a manner that the magnetic pole regions that have opposite polarities are alternately aligned. As a result, multiple magnetic poles are formed. Therefore, as shown by, for example, FIG. 4 of Japanese Patent Application Publication No. 2000-306726 (JP-A-2000-306726), the waveform that indicates the magnetic flux density distribution in the circumferential direction of a ring magnet, that is, the magnetomotive force waveform of the ring magnet is a trapezoidal waveform that contains an odd-order (e.g. third-order, fifth-order, seventh-order) harmonic component, and therefore, torque ripple is caused. This torque ripple may cause vibration or noise.

Therefore, for example, JP-A-2000-306726 and JP-A-2008-295207 describe technologies for addressing the above-described problem. In a motor described in JP-A-2000-306726, a boundary portion of each magnetic pole is demagnetized. In the motor described in JP-A-2008-295207, a boundary portion of each magnetic pole is provided with a region that has polarity opposite to that of the magnetic pole. Thus, the above-described harmonic component is substantially removed so that the magnetomotive force waveform is brought closer to a sine wave.

However, in recent years, quieter electric power steering systems have been demanded. Further, motors that are used as drive sources for the electric power steering systems are required to rotate more smoothly. In addition, there is a demand for development of better ring magnets and methods for producing the better ring magnets.

### SUMMARY OF THE INVENTION

It is an object of the invention to provide a method for producing a ring magnet with which a motor rotates more smoothly, a ring magnet, a motor includes the ring magnet, and an electric power steering system.

A first aspect of the invention relates to a method for producing a ring magnet in which magnetic poles that have opposite polarities are alternately formed along the circumferential direction of the ring magnet. According to this production method, multiple magnetic pole regions are set in an outer peripheral face of the ring magnet, and the magnetic poles are formed by magnetizing the magnetic pole regions in such a manner that the proportion of a region that is magnetized increases from a boundary portion of each magnetic pole region, which is near a next magnetic pole region, toward a center portion of the magnetic pole region, which corresponds to a magnetic pole center, in the circumferential direction.

With the structure described above, the magnetic flux density in the circumferential direction of the produced ring magnet increases from the boundary portion toward the center portion in each magnetic pole region. Thus, it is possible to more appropriately bring the magnetomotive force waveform of the ring magnet closer to a sine wave. As a result, it is possible to rotate a motor more smoothly, thereby reducing torque ripple.

A second aspect of the invention relates to a ring magnet in which magnetic poles that have opposite polarities are alternately formed along the circumferential direction of the ring magnet. The magnetic poles of the ring magnet are formed by magnetizing magnetic pole regions that are set in a peripheral face of the ring magnet so as to correspond to the magnetic poles, in such a manner that the proportion of a region that is magnetized increases from a boundary portion of each magnetic pole region, which is near a next magnetic pole region, toward a center portion of the magnetic pole region, which corresponds to a magnetic pole center, in the circumferential direction.

With the structure described above, the magnetic flux density of the ring magnet increases from the boundary portion toward the center portion in each magnetic pole region. As a result, it is possible to more appropriately bring the magnetomotive force waveform of the ring magnet closer to a sine wave.

A third aspect of the invention relates to a motor that includes the ring magnet. With the structure described above, it is possible to provide the motor that rotates smoothly, thereby producing just small torque ripple.

A fourth aspect of the invention relates to an electric power steering system that uses a motor including the ring magnet, as a drive source. With the structure described above, it is possible to reduce torque ripple during rotation of the motor, and therefore, to provide the quieter power steering system.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a view schematically showing the structure of an electric power steering system;
FIG. 2 is a view schematically showing the structure of a motor;
FIG. 3 is a development view showing a ring magnet;
FIG. 4 is a development view showing a ring magnet according to a first embodiment of the invention;
FIG. 5 is a view illustrating a manner of setting small regions that are targets of magnetization according to the first embodiment;
FIG. 6 is a graph showing the relationship between the circumferential position in each magnetic pole region and the proportion of a region magnetized according to the first embodiment;
FIG. 7 is a plain view illustrating a manner of magnetizing the ring magnet using magnetizing yokes;
FIG. 8 is a perspective view showing the magnetizing yoke;
FIG. 9A is a perspective view showing a base unit that constitutes the magnetizing yoke;
FIG. 9B is a front view showing the base unit that constitutes the magnetizing yoke;
FIG. 10 is a perspective view of a laminate unit that is formed by laminating the base units;
FIG. 11 is a development view showing a ring magnet according to a second embodiment of the invention;
FIG. 12 is a graph showing the relationship between the circumferential position in each magnetic pole region and the proportion of a region demagnetized according to the second embodiment;
FIG. 13 is a graph showing the relationship between the circumferential position in each magnetic pole region and the length of intervals between small regions that are targets of demagnetization;
FIG. 14 is a graph showing the relationship between the circumferential position in each magnetic pole region and the area of small regions that are targets of magnetization in another example;
FIG. 15 is a view illustrating a manner of setting small regions that are targets of magnetization in another example;
FIG. 16 is a perspective view showing a magnetizing yoke in another example;
FIG. 17 is a view illustrating a manner of setting small regions that are targets of magnetization in another example;
FIG. 18 is a view illustrating a manner of setting small regions that are targets of magnetization in another example;
FIG. 19 is a view illustrating a manner of setting small regions that are targets of demagnetization in another example;
FIG. 20A is a view illustrating the shape of regions demagnetized that are formed in boundary portions of consecutive magnetic poles that have opposite polarities;
FIG. 20B is a view illustrating the shape of regions demagnetized that are formed in boundary portions of consecutive magnetic poles that have opposite polarities; and
FIG. 20C is a view illustrating the shape of regions demagnetized that are formed in boundary portions of consecutive magnetic poles that have opposite polarities.

### DETAILED DESCRIPTION OF THE EMBODIMENTS

Hereafter, a ring magnet of a motor for an electric power steering system (EPS) according to a first embodiment of the invention will be described with reference to the accompanying drawings.

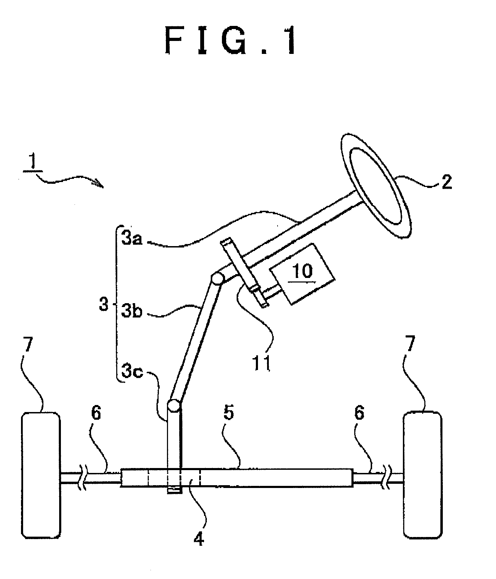

As shown in FIG 1, in an electric power steering system (EPS) 1 according to the first embodiment, a steering shaft 3, to which a steering wheel 2 is fixed, is connected to a rack shaft 5 via a rack-and-pinion mechanism 4. The rotation of the steering shaft 3, caused by a steering operation, is converted into linear reciprocating motion of the rack shaft 5 by the rack-and-pinion mechanism 4. Then, the linear reciprocating motion of the rack shaft 5, caused by the rotation of the steering shaft 3, is transmitted to knuckles (not shown) via tie-rods 6 that are connected to respective ends of the rack shaft 5. As a result, the steering angle of steered wheels 7 is changed.

The steering shaft 3 is formed by connecting a column shaft 3a, an intermediate shaft 3b, and a pinion shaft 3c to each other. The EPS 1 is a column-assist EPS in which the column shaft 3 a is rotated by a motor 10 that serves as a drive source.

In the EPS 1, the motor 10 is connected to the column shaft 3a via a speed reduction mechanism 11 so that the column shaft 3a is rotated by the motor 10. The rotational speed of the motor 10 is reduced by the speed reduction mechanism 11, and the rotation having the reduced speed is transmitted to the steering shaft 3. Thus, the motor torque is supplied to a steering system as assist force.

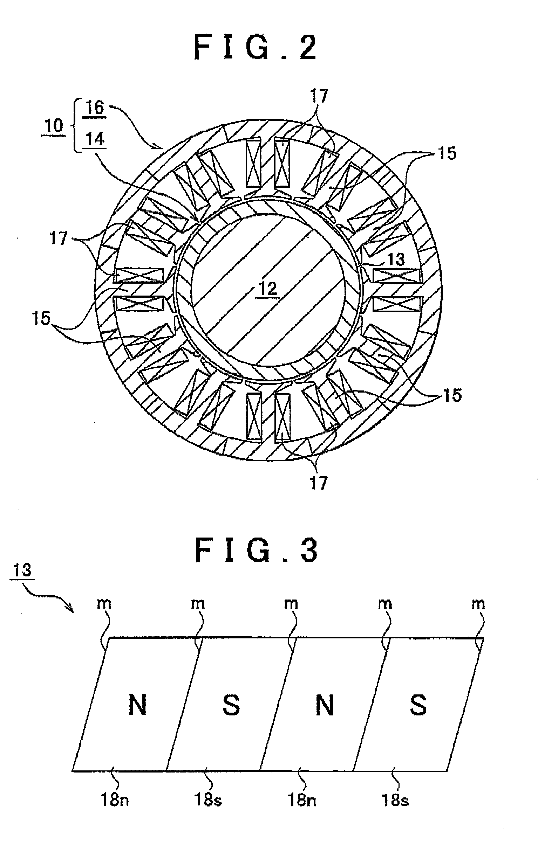

The structure of the motor 10 in the EPS 1 will be described below. As shown in FIG 2, the motor 10 is a brushless motor that is formed of a rotor 14 and a stator 16. The rotor 14 is formed by fitting a cylindrical ring magnet 13 on the outer periphery of a rotary shaft 12. The stator 16 has multiple teeth 15 that are arranged in a radial fashion so as to surround a radially-outer side portion of the rotor 14.

Coils 17, to which three-phase drive currents are supplied, are wound around the teeth 15. In the ring magnet 13, magnetic poles 18 (18n, 18s) that have opposite polarities are alternately formed along the circumferential direction of the ring magnet 13 (refer to FIG 3). More specifically, the stator 16 has twelve teeth 15, and ten magnetic poles 18 are formed in the ring magnet 13. In the ring magnet 13, each boundary m between the consecutive magnetic poles 18n and 18s is skewed with respect to the axis of the ring magnet 13 (up-down direction in FIG 3). The rotor 14 rotates based on the relationship between the rotating magnetic field formed on the stator 16 side due to energization of the coils 17 and the field magnetic flux of the rotor 14, formed by the ring magnet 13.

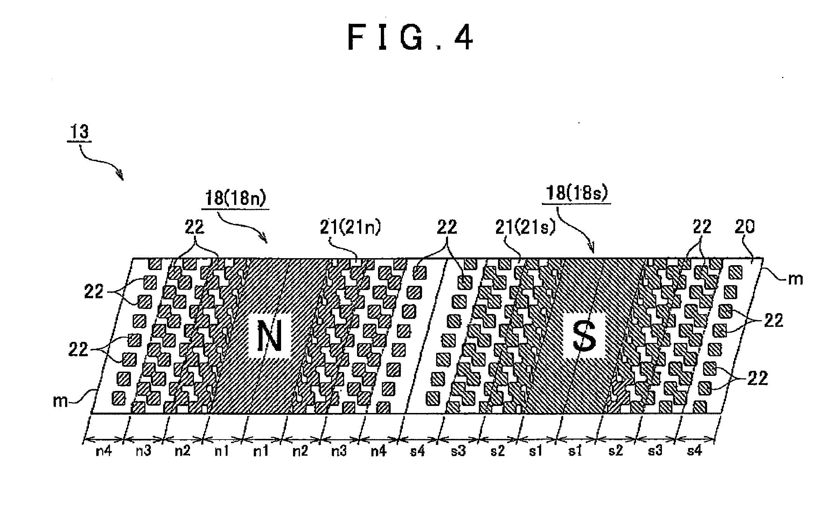

The ring magnet and a method for magnetizing the ring magnet will be described below. First, the ring magnet will be described. The magnetic poles 18 (18n, 18s) of the ring magnet 13 are formed in the following manner. As shown in FIG 4, first, magnetic pole regions 21 (21n, 21s) are set in an outer peripheral face 20 of the ring magnet 13 so as to correspond to the magnetic poles 18 (18n, 18s) of the ring magnet 13. Then, the magnetic pole regions 21 (21n, 21s) are magnetized in such a manner that the magnetic pole regions 21 (21n, 21s) that have opposite polarities are alternately aligned. The magnetic pole 18 is formed in each magnetic pole region 21 by setting multiple small regions 22 in the magnetic pole region 21 and magnetizing the small regions 22.

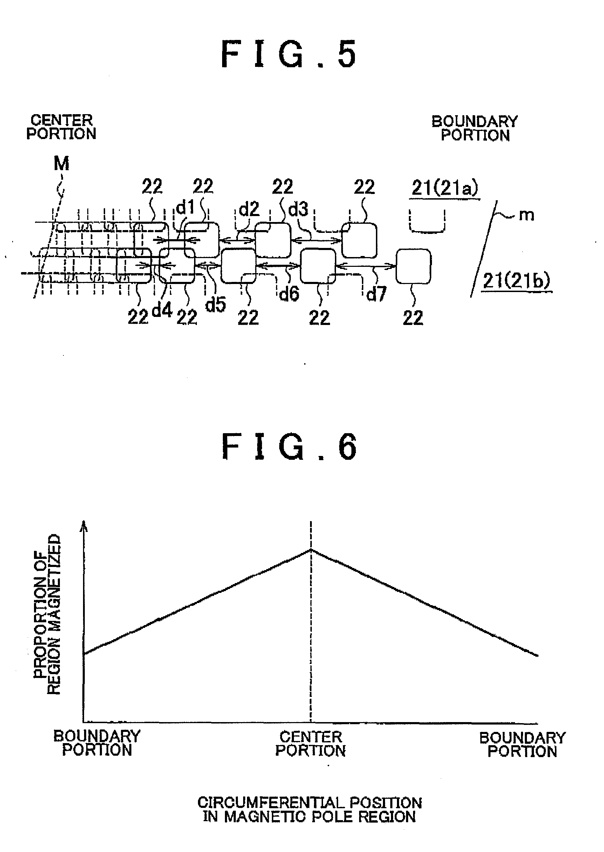

As shown in FIG 5, the multiple small regions 22 are set to have the same size (the same area and the same shape). Within each magnetic pole region 21 (21a), the length of intervals (d1 to d3, d4 to d7) between the consecutive small regions 22 in the circumferential direction (lateral direction in FIG 5) is set to decrease from a boundary portion (right side in FIG 5) near the magnetic pole region 21 (21b), located next to this magnetic pole region 21 (21a), toward a center portion (left side in FIG. 5) corresponding to the magnetic pole center M (d1 < d2 < d3, d4 < d5 < d6 < d7). In the center portion of each magnetic pole region 21, the small regions 22 are set to overlap with each other. Thus, in each magnetic pole region 21, the proportion of the region that is magnetized increases from each boundary portion toward the center portion in the circumferential direction (see FIG 6).

In an example shown in FIG 4, shaded portions indicate the region that is magnetized, and plain white portions indicate the region that is not magnetized. In each magnetic pole region 21 (21n, 21s), the proportion of the region that is magnetized gradually increases from each of sub-regions (n4, s4) in the portions near the boundaries with the magnetic pole regions 21, located next to this magnetic pole region 21, toward sub-regions (n1, s1) that are the closest to the center portion (n1 n2 > n3 > n4, s1 > s2 > s3 > s4).

When the area of the region that is magnetized is α and the area of the region that is not magnetized is β at a given position in the circumferential direction, the proportion γ of the region that is magnetized is expressed by the equation, γ = α / (α + β). Note that FIG 6 is a conceptual view showing the manner in which the proportion of the region that is magnetized increases from each boundary portion toward the center portion, and this manner does not strictly coincide with the distribution of the region that is magnetized in the example shown in FIG 4. In a sub-region where the proportion γ of the region that is magnetized is high, the magnetization amount per unit is larger than that in a sub-region where the proportion γ of the region that is magnetized is low.

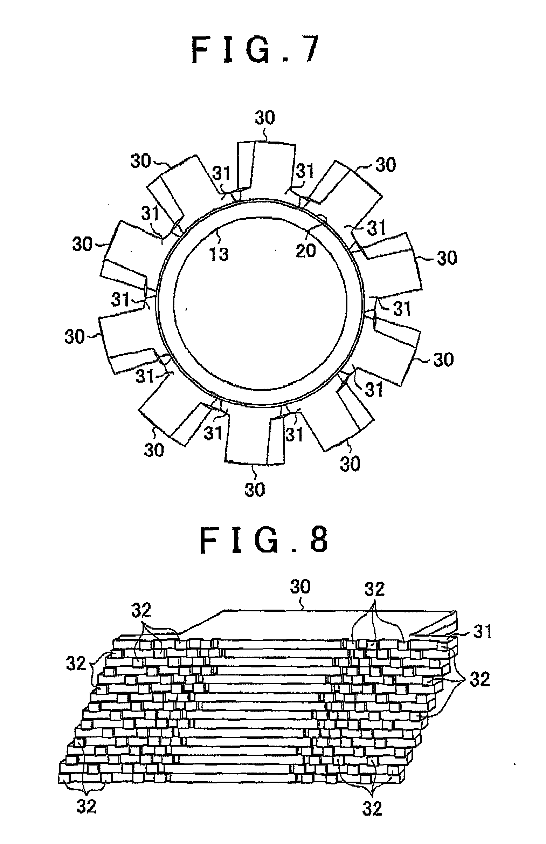

Next, the method for magnetizing the ring magnet 13 will be described. As shown in FIG 7, the ring magnet 13 is magnetized with the use of a plurality of magnetizing yokes 30. The magnetizing yokes 30 are arranged so as to surround the outer peripheral face 20 that is a magnetized face of the ring magnet 13. In FIG 7, back yokes are omitted and not shown. More specifically, each magnetizing yoke 30 has a magnetizing portion 31. The magnetizing portion 31 is formed in a curved shape so that the magnetizing portion 31 conforms to the outer peripheral face 20. The magnetizing yokes 30 are arranged on the radially outer side of the ring magnet 13 in such a manner that the magnetizing portions 31 face the outer peripheral face 20.

The motor 10 is a brushless motor that has, for example, ten magnetic poles and twelve slots. Therefore, ten magnetizing yokes 30 are arranged on the radially outer side of the ring magnet 13. Regions in the outer peripheral face 20, which face the magnetizing yokes 30, are set as the magnetic pole regions 21. Each magnetizing yoke 30 is supplied with an electric current directed in the opposite direction from an electric current supplied to the magnetizing yoke 30, located next to this magnetizing yoke 30. As a result, the magnetic pole, regions 21 set in the outer peripheral face 20 are magnetized, that is, the magnetic poles 18 are formed.

As shown in FIG 8, multiple projections 32 that project toward the outer peripheral face 20 are formed in the magnetizing portion 31 of each magnetizing yoke 30. Portions of the outer peripheral face 20, which face the projections 32, and regions near these portions are set as the small regions 22 of each magnetic pole region 21.

That is, the magnetic flux formed by the magnetizing yoke 30 passes through these projections 32 and flows toward the ring magnet 13, or flows from the ring magnet 13 side to the projections 32. As a result, the portions that face the projections 32 are given priority in magnetization.

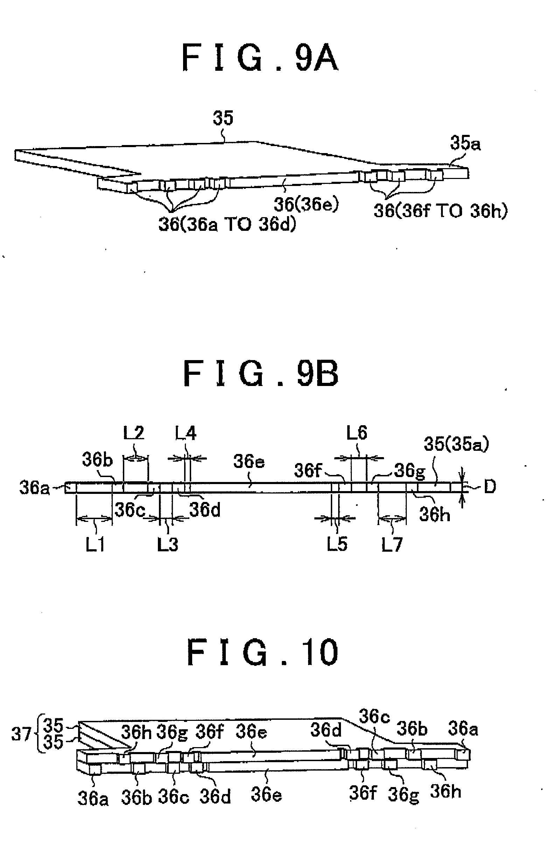

More specifically, the magnetizing yoke 30 is formed by laminating base units 35 formed of laminate steel plates as shown in FIGs. 9A and 9B. The thickness D of each base unit 35 (see FIG. 9B) is set to a value equal to the axial length of each projection 32 formed in the magnetizing portion 31 of each magnetizing yoke 30 (length of each projection 32 in the up-down direction in FIG 8). Multiple projected portions 36 (36a to 36h), used as the projections 32 when the base units 35 are laminated, are formed in an end portion 35a of each of the base units 35 that constitute the magnetizing portion 31.

One of the paired base plates 35 is placed over the other base plate 35 in such a manner that the end portion 35a of the one base plate 35 is in the opposite orientation with respect to the end portion 35a of the other base plate 35 (see FIGs. 9B and 10). In this way, a laminate unit 37 shown in FIG 10 is formed. The laminate units 37 are laminated in such a manner that the consecutive laminate units 37 are offset from each other in the circumferential direction by a predetermined angle corresponding to the skew angle. As a result, each magnetizing yoke 30 is formed (see FIG 8).

That is, the interval L1 between the projected portions 36a and 36b, the interval L2 between the projected portions 36b and 36c, the interval L3 between the projected portions 36c and 36d, the interval L4 between the projected portions 36d and 36e, the interval L5 between the projected portions 36e and 36f, the interval L6 between the projected portions 36f and 36g, and the interval L7 between the projected portions 36g and 36h are set so as to correspond to the intervals between the small regions 22 (d7 to d4, d1 to d3) as shown in FIG 5. More specifically, the interval L1, the interval L2, the interval L3 and the interval L4 are set so as to correspond to the intervals d7, d6, d5, and d4 between the small regions 22, respectively. Further, the interval L5, the interval L6, and the interval L7 are set so as to correspond to the intervals d1, d2, and d3 between the small regions 22, respectively. The regions that are actually magnetized are larger than the portions that face the projected portions 36a to 36h. Therefore, the intervals L1, L2, L3, L4, L5, L6 and L7 are set to be larger than the intervals d7, d6, d5, d4, d1, d2, and d3 between the small regions 22, respectively. In the first embodiment, because the thus formed magnetizing yokes 30 are used, it possible to form magnetic poles 18 by magnetizing the small regions 22 as described above.

According to the first embodiment described above, the following effects are obtained.
1) The magnetic poles 18 (18n, 18s) of the ring magnet 13 are formed in the following manner. First, the multiple small regions 22 are set in each of the magnetic pole regions 21 (21n, 21s) that are set in the outer peripheral face 20 so as to correspond to the magnetic poles 18. Then, the small regions 22 are magnetized. The small regions 22 are set in such a manner that, in each magnetic pole region 21, the proportion of the region that is magnetized increases from each boundary portion toward the center portion in the circumferential direction.

With the structure described above, in each magnetic pole region 21, the magnetic flux density increases from each boundary portion toward the center portion in the circumferential direction. As a result, the magnetomotive force waveform of the ring magnet 13 is appropriately brought closer to a sine wave. Thus, torque ripple is reduced so that the motor 10 that is the drive source for the EPS 1 becomes quieter.

2) In each magnetic pole region 21 (21a), the length of intervals (d1 to d3, d4 to d7) between the consecutive small regions 22 in the circumferential direction is set to decrease from the boundary portion (right side in FIG 5) near the magnetic pole region 21 (21b), located next to this magnetic pole region 21 (21a), toward the center portion corresponding to the magnetic pole center M (d1 < d2 < d3, d4 < d5 < d6 < d7). With this structure, it is possible to easily increase the proportion of the region that is magnetized from each boundary portion toward the center portion in each magnetic pole region 21.

3) The ring magnet 13 is magnetized with the use of the magnetizing yokes 30. Each magnetizing yoke 30 has the magnetizing portion 31 having the multiple projections 32 that project toward the outer peripheral face 20. With this structure, it is possible to easily set and magnetize the small regions 22.

4) The magnetizing yoke 30 is formed by laminating the base units 35 each of which has the multiple projected portions 36 (36a to 36h) that form the projections 32 of the magnetizing portion 31. With this structure, it is possible to easily form the magnetizing yoke 30 having the magnetizing portion 31 in which the multiple projections 32 are formed.
In addition, it is possible to form the skewed magnetizing yoke 30 by laminating the base units 35 in such a manner that the laminate units 37 are offset from each other by the predetermined angle in the circumferential direction.

5) The intervals L1 to L7 between the projected portions 36 formed in the base unit 35 are set so as to correspond to the intervals (d7, d6, d5, d4, d1, d2, and d3) between the small regions 22 set in each magnetic pole region 21. Thus, it is possible to easily form the magnetizing yoke 30 with which the proportion of the region that is magnetized is increased from each boundary portion toward the center portion in each magnetic pole region 21.

6) The base units 35 are formed of laminate steel plates. The projected portions 36a to 36h are formed in the end portion 35a of the base unit 35. One of the paired base plates 35 is placed over the other base plate 35 in such a manner that the end portion 35a of the one base plate 35 is in the opposite orientation with respect to the end portion 35a of the other base plate 35. In this way, the laminate unit 37 is formed. Each magnetizing yoke 30 is formed by laminating the laminate units 37. With this structure, it is possible to significantly reduce the number of punching dies for steel plates that are laminated to form the base units 35. As a result, it is possible to reduce the production cost.

Hereafter, a second embodiment of the invention will be described with reference to the drawings. For the convenience of explanation, the same portions as those in the first embodiment will be denoted by the same reference numerals as those in the first embodiment, and description thereof will not be provided below.

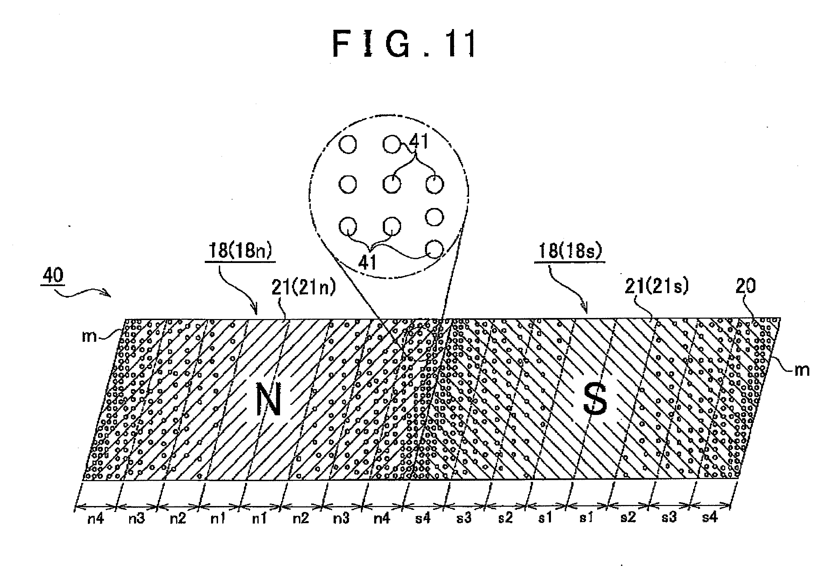

In the second embodiment, the magnetic poles 18 (18n, 18s) in a ring magnet 40 (see FIG 11) are formed in the following manner. First, the magnetic pole regions 21 (21n, 21s) are set in the outer peripheral face 20 of the ring magnet 40. Then, the whole faces of the magnetic pole regions 21 (21n, 21s) are magnetized in such a manner that the magnetic pole regions 21 (21n, 21s) that have opposite polarities are alternately aligned. The whole faces of the magnetic pole regions 21 (21n, 21 s) are magnetized with the use of ordinary magnetizing yokes having no projection 32, unlike the magnetizing yokes 30 in the first embodiment.

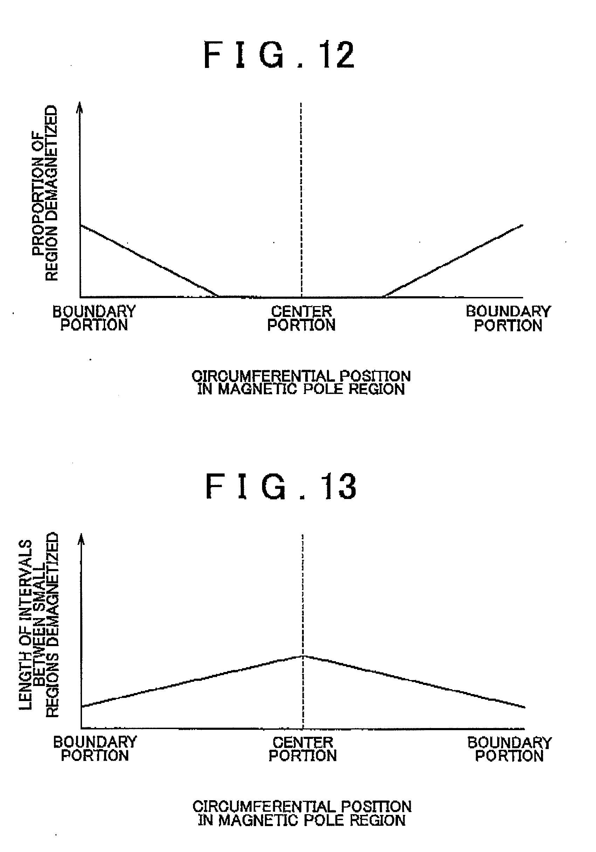

In the second embodiment, after the magnetic poles 18 (18n, 18s) are formed in the above-described manner, multiple small regions 41 are set in each of the magnetic pole regions 21 (21n, 21s), and these small regions 41 are demagnetized. The small regions 41 are demagnetized when the small regions 41 are heated by irradiation with laser beams. As shown in FIG 12, these small regions 41 are set in such a manner that the proportion of the region that is demagnetized increases from the center portion toward each boundary portion in the circumferential direction (lateral direction in FIG 11).

More specifically, as shown in FIG 13, the small regions 41 that are the targets of demagnetization are set in such a manner that the length of intervals between the consecutive small regions 41 in the circumferential direction decreases from the center portion toward each boundary portion. Thus, as described above, the proportion of the region that is demagnetized increases from the center portion toward each boundary portion. In the sub-region where the proportion of the region that is demagnetized is high, the magnetization amount per unit area is smaller than that in the sub-region where the proportion of the region that is demagnetized is low.

According to the second embodiment, it is possible to obtain the following effects.
1) In each of the magnetic pole regions 21 (21n, 21s) of which the whole faces are magnetized to form the magnetic poles 18 (18n, 18s), the multiple small regions 41 are set and demagnetized. The small regions 41 are set in such a manner that the proportion of the region that is demagnetized increases from the center portion toward each boundary portion in the circumferential direction in each magnetic pole region 21.

With the structure described above, the magnetic flux density decreases from the center portion toward each boundary portion in each magnetic pole region 21 in the circumferential direction. As a result, the magnetomotive force waveform of the ring magnet 40 is more appropriately brought closer to a sine wave, as in the first embodiment described above.

In each magnetic pole region 21, the small regions 41 are set in such a manner that the length of intervals between the consecutive small regions 41 in the circumferential direction decreases from the center portion toward each boundary portion. In this way, it is possible to easily increase the proportion of the region that is demagnetized from the center portion toward each boundary portion in each magnetic pole region 21.

3) The small regions 41 are demagnetized when the small regions 41 are heated by irradiation with laser beams. With this structure, it is possible to form each small region 41 into a minute dot shape. As a result, it is possible to more accurately adjust the magnetomotive force waveform of the ring magnet 40.

The above-described embodiments may be modified as follows.
In the embodiments described above, the invention is applied to the ring magnets 13, 40 of the motor 10 that is used as the drive source for the EPS 1. However, application of the invention is not to this. For example, the invention may be applied to ring magnets of motors that are used for devices other than electric power steering systems. Also, the invention may be applied to ring magnets used for devices other than motors. The electric power steering systems to which the invention may be applied include not only a column-assist EPS as described in the first embodiment but also a rack-assist EPS.

In the embodiments described above, each of the ring magnets 13 and 40 has a cylindrical shape. However, each of the ring magnets 13 and 40 need not have a perfectly cylindrical shape. For example, each of the ring magnets 13 and 40 may have a substantially C-shaped cross section, that is, may have a shape obtained by cutting off a portion of a cylinder in the axial direction.

In the embodiments described above, the outer face 20 of the ring magnets 13 (40) is used as the magnetized face. Alternatively, the invention may be applied to a ring magnet of which the inner peripheral face is used as a magnetized face.
In the second embodiment, the small regions 41 are demagnetized when the small regions 41 are heated by irradiation with laser beams. Alternatively, the small regions 41 may be demagnetized by another method, for example, by heating the small regions 41 with the use of heating wires.

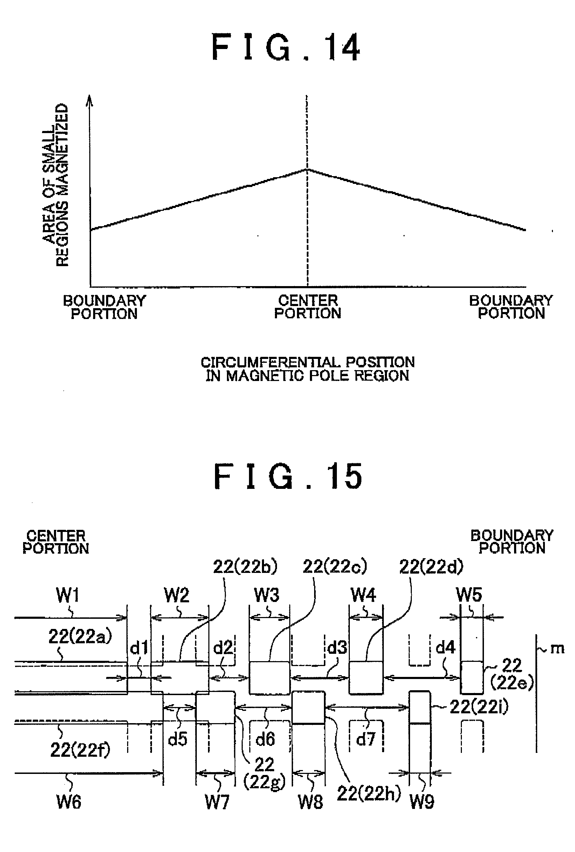

In the first embodiment, in each magnetic pole region 21, the length of intervals between the consecutive small regions 22 in the circumferential direction is decreased from each boundary portion toward the center portion. Thus, the proportion of the region that is magnetized is increased from each boundary portion toward the center portion within each magnetic pole region 21_ Alternatively, as shown in FIG 14, the area of the small regions that are the targets of magnetization may be increased from each boundary portion toward the center portion in the circumferential direction. With this structure as well, it is possible to increase the proportion of the region that is magnetized from each boundary portion toward the center portion within each magnetic pole region This technology may be employed in setting the small regions 41 that are targets of demagnetization as described in the second embodiment. That is, the area of the small regions 41 may be increased from the center portion toward each boundary portion in the circumferential direction. Thus, it is possible to easily increase the proportion of the region that is demagnetized from the center portion toward each boundary portion within each magnetic pole region 21.

The proportion of the region that is magnetized may be increased from each boundary portion toward the center portion in the circumferential direction within each magnetic pole region 21 by adjusting both the intervals between the small regions 22 and the area of the small regions 22.

More specifically, in an example shown in FIG 15, consecutive small regions 22a, 22b, 22c, 22d and 22e in the circumferential direction are set in such a manner that the length of the interval between the consecutive small regions 22 decreases from the boundary portion (right side in FIG 15) toward the center portion (left side in FIG 15) (d1 < d2 < d3 < d4). In addition, the small regions 22a to 22e are set in such a manner that the small region 22 that is closer to the center portion has a larger circumferential width (w1 > w2 > w3 > w4). That is, in this example, the small regions 22 are the same in axial length (length in the up-down direction in FIG. 15). Therefore, the small regions 22a to 22e are set in such a manner that the small region 22 that is closer to the center portion has a larger area. Similarly, the small regions 22f to 22i are set in such a manner that the length of the interval between consecutive two small regions 22 decreases from the boundary portion toward the center portion (d5 < d6 < d7) and the small region 22 that is closer to the center portion has a larger circumferential width (w6 > w7 > w8 > w9). It is possible to more appropriately adjust the proportion of the region that is magnetized in the circumferential direction within each magnetic pole region 21 by adjusting both the length of intervals between the small regions 22a to 22i and the area of the small regions 22a to 22i. The technology in which the proportion is adjusted by adjusting both the length of intervals between the small regions and the area of the small regions may be applied in the case where the proportion of the region that is demagnetized is adjusted in the circumferential direction as described in the second embodiment.

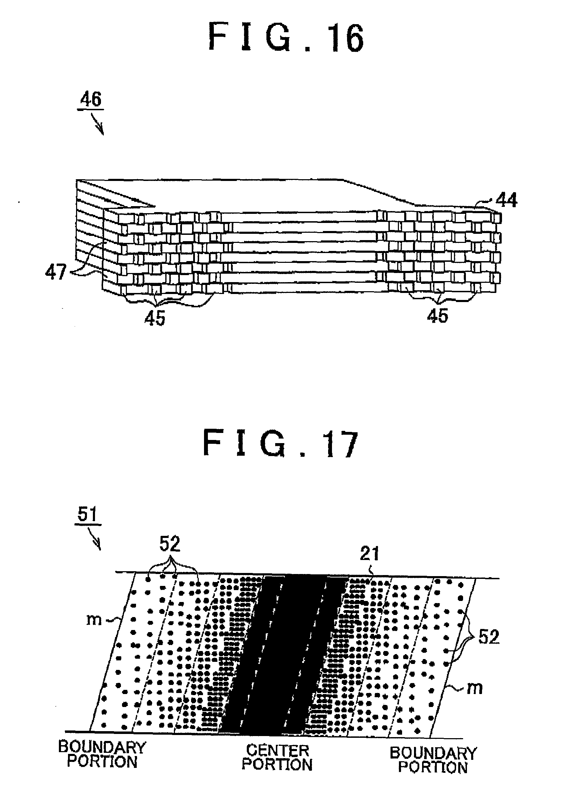

The small regions 22a to 22i that are different in area and that are aligned at different intervals may be magnetized in a manner similar to that in the first embodiment. The small regions 22a to 22i are magnetized with the use of a magnetizing yoke 46. As shown in FIG 16, the magnetizing yoke 16 has a magnetizing portion 44 having multiple projections 45 that project toward the peripheral face of a ring magnet.
That is, the area of the projections 45 and the length of intervals between the projections 45 in the magnetizing yoke 46 may be set based on the area of the small regions 22a to 22i and the length of intervals between the small regions 22a to 22i.

In addition, the magnetizing yoke 46 may be formed by laminating base units 47 formed of laminate steel plates, as in the first embodiment. In the example shown in FIG 15, the magnetizing yoke 46 is not skewed. Therefore, in the magnetizing yoke 46 shown in FIG 16, the base units 47 are not offset from each other in the circumferential direction during lamination.

In the first embodiment, the laminate unit 37 is formed by placing one of the paired base plates 35 over the other base plate 35 in such a manner that the base plates 35 are in the opposite orientations. Then, the laminated base units 37 are offset from each other by the predetermined angle corresponding to the skew angle. Alternatively, the base units 35 themselves may be offset from each other.

The length of intervals between the consecutive small regions (22, 41) may be adjusted not only in the circumferential direction but also in the axial direction. The area of the consecutive small regions (22, 41) may be adjusted by adjusting not only the circumferential width but also the axial length.

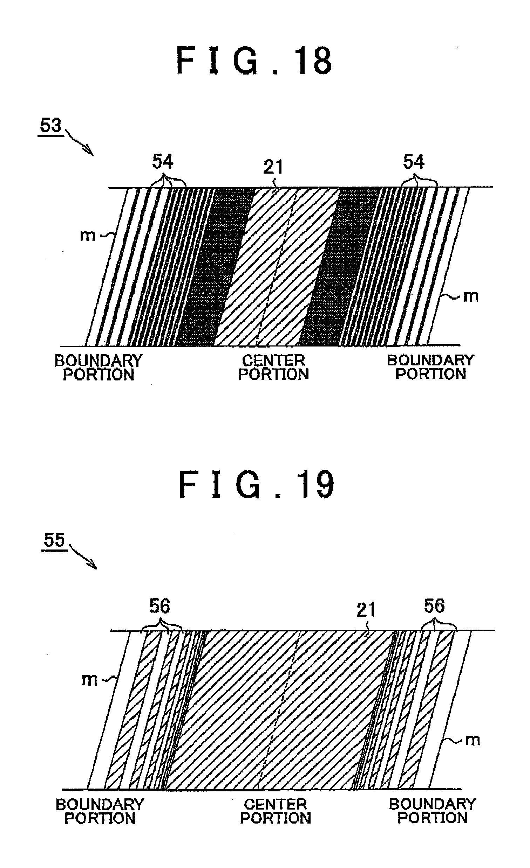

The small region 41 in the second embodiment has a minute dot shape. As in the second embodiment, in each magnetic pole region 21, each small region that is the target of magnetization may have a minute dot shape, for example, the shape of a small region 52 in a ring magnet 51 shown in FIG. 17. Alternatively, each small region may have a strip shape, for example, the shape of a small region 54 in a ring magnet 53 shown in FIG 18. Each small region that is the target of demagnetization may also have a strip shape, for example, the shape of a small region 56 in a ring magnet 55 shown in FIG 19.

In the embodiments and modified examples described above, the relationship between the circumferential position in each magnetic pole region and each of the proportion of the region that is magnetized (demagnetized), the length of intervals between the small regions that are magnetized (demagnetized) and the area of the small regions need not change linearly. In the first embodiment, there is provided the description that FIG. 6 is the conceptual view showing the manner in which the proportion of the region that is magnetized increases from each boundary portion toward the center portion and the manner does not strictly coincide with the distribution of the region that is magnetized in the example shown in FIG. 4. This applies also to FIG. 12, FIG. 13, and FIG. 14. FIG. 12 shows the relationship between the circumferential position in the magnetic pole region and the proportion of the region that is demagnetized. FIG. 13 shows the relationship between circumferential position in the magnetic pole region and the length of intervals between the small regions that are demagnetized. FIG. 14 shows the relationship between the circumferential position in the magnetic pole region and the area of the small regions that are magnetized.

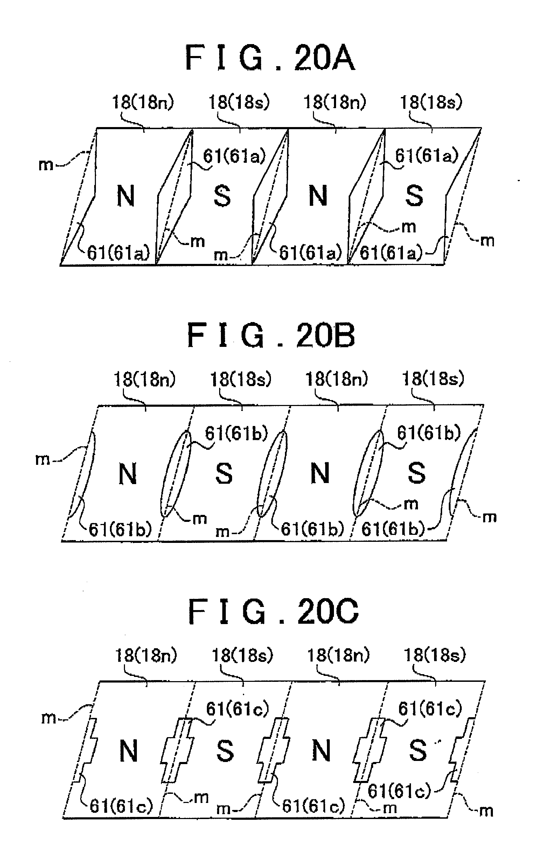

There are other methods for more appropriately bringing the magnetomotive force waveform of a ring magnet to a sine wave. For example, a demagnetized region 61 may be formed in a portion at the boundary between the consecutive magnetic poles 18 (18n, 18s) that have opposite polarities, as shown in FIGs. 20A, 20B and 20C. The demagnetized region 61 is formed in such a shape that the circumferential width decreases toward each axial end

More specifically, as shown in FIG. 20A, a demagnetized region 61a is formed in a parallelogram shape in which the axial center portion is largest-Alternatively, as shown in FIG. 20B, a demagnetized region 61b may be formed in a shape of an ellipse. Further alternatively, as shown in FIG. 20C, a demagnetized region 61c may be formed in a substantially cross-shape in which the axial center portion is largest.
Magnetic poles of a ring magnet are formed by magnetizing multiple small regions that are set in each of magnetic pole regions that are set in an outer peripheral face of the ring magnet so as to correspond to the magnetic poles. The small regions are set in such a manner that the proportion of a region that is magnetized increases from a boundary portion of each magnetic pole region toward a center portion of the magnetic pole region in the circumferential direction.

## Claims

1. A method for producing a ring magnet in which magnetic poles that have opposite polarities are alternately formed along a circumferential direction of the ring magnet, comprising:
setting multiple magnetic pole regions in a peripheral face of the ring magnet; and
setting a magnetization amount for each magnetic pole region in such a manner that a proportion of magnetization increases from a boundary portion of the magnetic pole region, which is near a next magnetic pole region, toward a center portion of the magnetic pole region, which corresponds to a magnetic pole center, in the circumferential direction.

2. The method for producing the ling magnet according to claim 1, further comprising:
setting multiple small regions in each magnetic pole region, wherein
the small regions are magnetized in such a manner that a proportion of a region that is magnetized increases from the boundary portion of the magnetic pole region, which is near the next magnetic pole region, toward the center portion of the magnetic pole region, which corresponds to the magnetic pole center, in the circumferential direction.

3. The method for producing the ring magnet according to claim 2, wherein a length of intervals between the small regions is set to decrease from the boundary portion toward the center portion.

4. The method for producing the ring magnet according to claim 2 or 3, wherein an area of the small regions is set to increase from the boundary portion toward the center portion.

5. The method for producing the ring magnet according to any one of claims 1 to 4, wherein the small regions are magnetized with use of a magnetizing yoke that has multiple projections that face the peripheral face of the ring magnet.

6. The method for producing the ring magnet according to claim 1, further comprising:
magnetizing a whole face of each magnetic pole region, wherein
multiple small regions are set in each magnetic pole region in such a manner that a proportion of a region that is demagnetized increases from the center portion of the magnetic pole region, which corresponds to the magnetic pole center, toward the boundary portion of the magnetic pole region, which is near the next magnetic pole region, in the circumferential direction, and the small regions are demagnetized.

7. The method for producing the ring magnet according to claim 6, wherein the demagnetization is executed by heating the region that is magnetized.

8. A ring magnet in which magnetic poles that have opposite polarities are alternately formed along a circumferential direction of the ring magnet, wherein
the magnetic poles are formed by magnetizing magnetic pole regions that are set in a peripheral face of the ring magnet so as to correspond to the magnetic poles, in such a manner that a proportion of a region that is magnetized increases from a boundary portion of each magnetic pole region, which is near a next magnetic pole region, toward a center portion of the magnetic pole region, which corresponds to a magnetic pole center, in the circumferential direction.

9. The ring magnet according to claim 8, wherein:
the magnetic poles are formed by magnetizing whole faces of the magnetic pole regions that are set in the peripheral face of the ring magnet so as to correspond to the magnetic poles, and forming a region that is demagnetized in such a manner that the proportion of the region that is magnetized increases from the boundary portion of each of the magnetic pole regions that are set in the peripheral face of the ring magnet so as to correspond to the magnetic poles, the boundary portion being near the next magnetic pole region, toward the center portion of the magnetic pole region, which corresponds to the magnetic pole center, in the circumferential direction.

10. A motor that includes the ring magnet according to claim 8 or 9.

11. An electric power steering system that uses a motor including the ring magnet according to claim 8 or 9, as a drive source.
